(19) Europäisches Patentamt / European Patent Office / Office européen des brevets

(11) **EP 2 521 075 B1**

(12) **FASCICULE DE BREVET EUROPEEN**

(45) Date de publication et mention de la délivrance du brevet:
**24.08.2016   Bulletin 2016/34**

(51) Int Cl.:
**G06Q 10/00** *(2012.01)*   **G06Q 10/04** *(2012.01)*
**G06Q 50/06** *(2012.01)*

(21) Numéro de dépôt: **12167013.7**

(22) Date de dépôt: **07.05.2012**

(54) **Procédé d'évaluation d'un potentiel photovoltaïque d'un bâtiment à partir d'un terminal utilisateur, et application associée**

Verfahren zur Bewertung des fotovoltaischen Potenzials eines Gebäudes mit Hilfe eines Benutzerterminals, und entsprechende Anwendung

Method of assessing a photovoltaic potential of a building from a user terminal, and associated application

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2011   FR 1153922**

(43) Date de publication de la demande:
**07.11.2012   Bulletin 2012/45**

(73) Titulaire: **Electricité de France**
**75008 Paris (FR)**

(72) Inventeurs:
• **Delalonde, Charles**
  **94250 Gentilly (FR)**
• **Rouilly, Stéphane**
  **75013 Paris (FR)**
• **Gerald, Alain**
  **69400 Limas (FR)**

(74) Mandataire: **Regimbeau**
**20, rue de Chazelles**
**75847 Paris Cedex 17 (FR)**

(56) Documents cités:
• **"SMA Solarchecker iPhone Application Provides Versatile Measurement Tool for Solar Installers, Consumers", , 24 février 2010 (2010-02-24), XP055016699, Extrait de l'Internet: URL:http://www.sma-america.com/fileadmin/fm-dam/pressekits_US/100224/SMA_Solarchecke r_final.pdf [extrait le 2012-01-17]**
• **Uli Jungmann ET AL: "Energieausweis für Gebäude - nach Energieeinsparverordnung (EnEV 2009)", , 1 décembre 2009 (2009-12-01), XP055016830, Berlin Extrait de l'Internet: URL:http://www.bmvbs.de/cae/servlet/conten tblob/24270/publicationFile/11303/broschue re-energieausweis-fuer-gebaeude-nach-energ ieeinsparverordnung-enev-2009.pdf [extrait le 2012-01-18]**
• **Jean-Baptiste Henry ET AL: "Thermographie aérienne des villes Mythes et réalités", , 1 mars 2009 (2009-03-01), XP055016808, Extrait de l'Internet: URL:http://georezo.net/blog/sigurba/files/ 2010/09/XYZ_thermo.pdf [extrait le 2012-01-18]**
• **SURI M ET AL: "Geographic Aspects of Photovoltaics in Europe: Contribution of the PVGIS Website", 1 mars 2008 (2008-03-01), IEEE JOURNAL OF SELECTED TOPICS IN APPLIED EARTH OBSERVATIONS AND REMOTE SENSING, IEEE, USA, PAGE(S) 34 - 41, XP011233870, ISSN: 1939-1404 * abrégé * * chapitres I et II ***
• **Jan Karwatzki: "Wohngebäude nach EnEV 2009 und EEWärmeG nachweisen - gewusst wie!", , 12 février 2011 (2011-02-12), XP055016676, Extrait de l'Internet: URL:http://alt-bau-neu.de/global/dbbin/160 211_090810_1102_12_karwatzki-wohngebaeude _nach_enev.pdf [extrait le 2012-01-17]**

EP 2 521 075 B1

• Melita Tuschinski: "Wärmegesetz 2009 Kurz-Info EEWärmeG", , 1 juillet 2009 (2009-07-01), XP055016672, Extrait de l'Internet: URL:http://www.architekt-wirdeier.de/grafi k/090731_tuschinski_kurzinfo_waermegesetz_ 2009.pdf [extrait le 2012-01-17]

• 'THERMOGRAPHIE AÉRIENNE DE LA VILLE DE NOISIEL' IAU, [en ligne] 22 Juin 2007, page 17PP, XP055016809 Extrait de l'Internet: <URL:http://www.iau-idf.fr/fileadmin/user_u pload/Enjeux/contraintes_nrj/ateliers/A7-2. pdf> [extrait le 2012-01-18]

**EP 2 521 075 B1**

**Description**

DOMAINE DE L'INVENTION

L'invention concerne un procédé d'évaluation d'un potentiel photovoltaïque d'un bâtiment à partir d'un terminal utilisateu.

ETAT DE LA TECHNIQUE

Les équipements de production d'énergie électrique à partir d'énergie solaire comprennent généralement des panneaux ou modules photovoltaïques incluant un réseau de cellules photovoltaïques dont chaque cellule produit une tension électrique dont la valeur dépend de la lumière qu'elle reçoit.
Lorsqu'ils sont exposés à la lumière du soleil, ces équipements photovoltaïques produisent ainsi de l'énergie électrique qui peut être consommée sur place ou alimenter un réseau de distribution.
Les équipements photovoltaïques sont souvent installés sur les toits des logements ou des bâtiments, soit en intégration de toiture, soit en surimposition de la toiture existante.
Toutefois, avant d'envisager l'installation d'équipements photovoltaïques sur la toiture d'un bâtiment, il est nécessaire d'évaluer la rentabilité de ces équipements afin de déterminer l'intérêt de procéder à une telle installation.
La rentabilité de ces équipements dépend notamment du rendement énergétique qui peut être attendu. Ce rendement énergétique peut être estimé à partir du taux d'ensoleillement dans la zone géographique dans laquelle est situé le bâtiment, de la surface de toiture disponible, de l'orientation et de l'inclinaison du versant de la toiture.
Le SMA Solarchecker est cité comme exemple pour une application iPhone calculant une telle estimation.

RESUME DE L'INVENTION

Un but de l'invention est de proposer un procédé permettant à un utilisateur d'évaluer facilement et rapidement un potentiel photovoltaïque d'un bâtiment.
Ce but est atteint dans le cadre de la présente invention grâce à un procédé d'évaluation d'un potentiel photovoltaïque d'un bâtiment à partir d'un terminal utilisateur, dans lequel le terminal utilisateur contient une application adaptée pour exécuter automatiquement des étapes de :

- déterminer une valeur de pertes thermiques associées au bâtiment, en fonction de coordonnées géographiques du bâtiment, et
- estimer une valeur de gain énergétique associé à une installation de panneaux photovoltaïques sur une toiture du bâtiment, à partir des coordonnées géographiques du bâtiment, d'un paramètre d'orientation de la toiture, d'un paramètre de pente de la toiture et de la valeur de pertes thermiques associée à la toiture.

Le procédé proposé présente la particularité que l'étape d'estimation d'une valeur de gain énergétique prend en compte une valeur de pertes thermiques associées au bâtiment.
Autrement dit, la valeur de gain énergétique estimée tient compte non seulement de l'énergie électrique produite par les panneaux photovoltaïques, mais également de l'énergie économisée du fait de l'installation de panneaux sur la toiture qui a pour effet de modifier les pertes thermiques engendrées par le bâtiment.
Dans un mode de mise en oeuvre du procédé, l'application est adaptée pour exécuter également une étape de :

- déterminer une quantité de gaz à effet de serre dont l'émission dans l'atmosphère est évitée du fait de l'installation des panneaux photovoltaïques, en fonction de la valeur de gain énergétique estimée.

Dans un mode de mise en oeuvre du procédé, l'application est adaptée pour exécuter également une étape de :

- déterminer des économies financières réalisées du fait de l'installation des panneaux photovoltaïques, en fonction de la valeur de gain énergétique estimée.

La valeur de pertes thermiques peut en particulier être déterminée à partir de données thermographiques, les données thermographiques incluant, pour chaque bâtiment se trouvant dans une zone géographique donnée, une valeur de pertes énergétiques.
Dans un mode de mise en oeuvre du procédé, l'application est adaptée pour exécuter des étapes de :

- émettre une requête vers un serveur distant, le serveur contenant les données thermographiques,

- recevoir de la part du serveur les données thermographiques incluant des données représentatives des pertes thermiques du bâtiment dont le potentiel photovoltaïque est évalué.

La requête émise par le terminal utilisateur peut contenir des coordonnées géographiques du bâtiment.

Les données thermographiques peuvent être sous la forme de cartes thermographiques, appelées également « thermicartes ».

L'invention concerne également une application d'un potentiel photovoltaïque d'un bâtiment, l'application étant téléchargeable dans un terminal utilisateur, et étant apte à exécuter automatiquement les étapes du procédé défini précédemment.

PRESENTATION DES FIGURES

D'autres caractéristiques et avantages ressortiront encore de la description qui suit, laquelle est purement illustrative et non limitative et doit être lue en regard des figures annexées, parmi lesquelles :

- la figure 1 représente de manière schématique un utilisateur utilisant un terminal mobile afin d'estimer une valeur de gain énergétique associé à une installation de panneaux photovoltaïques sur une toiture d'un bâtiment,
- la figure 2 est un diagramme illustrant de manière schématique des étapes d'un procédé d'évaluation d'un potentiel photovoltaïque du bâtiment, conforme à un mode de réalisation de l'invention,

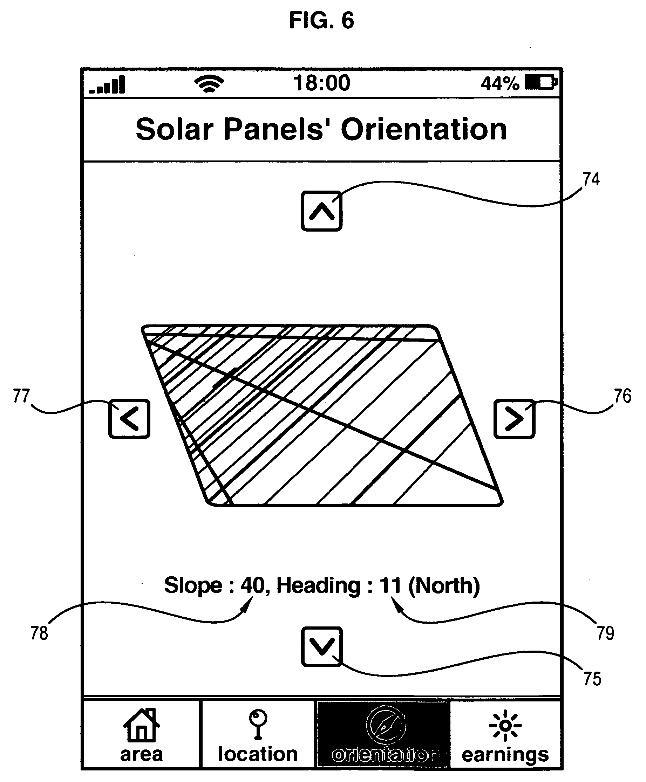

- les figures 3 à 6, 8 et 9 représentent de manière schématique des pages affichées sur un écran du terminal utilisateur,
- la figure 7 représente de manière schématique une carte du rayonnement thermique de toitures.

DESCRIPTION DETAILLEE D'UN MODE DE REALISATION

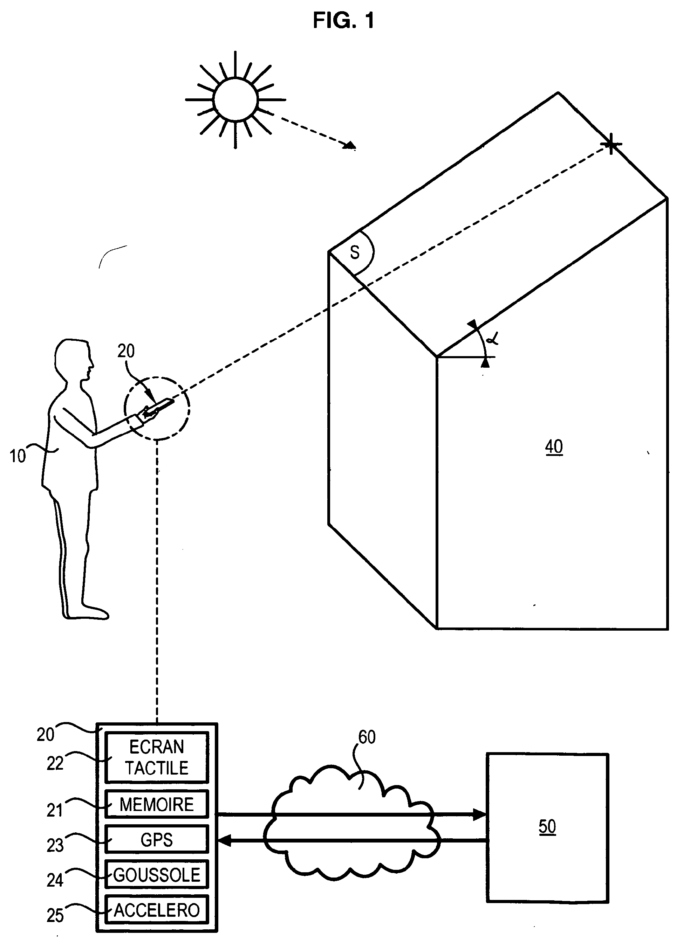

La figure 1 représente de manière schématique un utilisateur 10 utilisant un terminal utilisateur 20 afin d'estimer une valeur de gain énergétique associé à une installation de panneaux photovoltaïques sur une toiture 30 d'un bâtiment 40.

Le terminal utilisateur 20 est un téléphone mobile, tel qu'un téléphone intelligent (smartphone) ou un assistant numérique personnel PDA (Personal Digital Assistant), incluant une mémoire 21, un écran tactile 22 et un récepteur de localisation GPS 23 (Global Positioning System). Le téléphone inclut également une boussole 24 et un accéléromètre 25, ainsi qu'éventuellement un clavier 26.

La mémoire 21 contient une application d'évaluation d'un potentiel photovoltaïque des bâtiments, qui peut être déclenchée par l'utilisateur pour estimer une valeur de gain énergétique liée à l'installation d'équipements photovoltaïques sur une toiture d'un bâtiment. Cette application est par exemple une application en langage Java qui est présente dès l'origine dans le terminal utilisateur ou qui peut être téléchargée par l'utilisateur à partir d'un site web ou d'un magasin d'applications.

Par ailleurs, le terminal utilisateur 20 est apte à échanger des données avec un serveur 50 distant via à réseau de communication 60, tel qu'un réseau Internet par exemple.

Le serveur 50 contient des données relatives au rayonnement thermique émis par les toitures des bâtiments dans certaines zones géographiques. Ces données sont par exemple sous la forme de cartes thermographique. Ces cartes thermographiques sont généralement obtenues à partir d'images enregistrées par des caméras infrarouges. Ces cartes thermographiques représentent une zone géographique avec différente couleurs, chaque couleur étant associée à une gamme de valeurs de rayonnement thermique. En particulier, sur ces cartes thermographiques apparaissent les toitures des bâtiments dans la zone géographique considérée. La carte thermographique permet donc d'associer à chaque toiture une valeur moyenne de pertes énergétiques qui dépend notamment de l'isolation de la toiture.

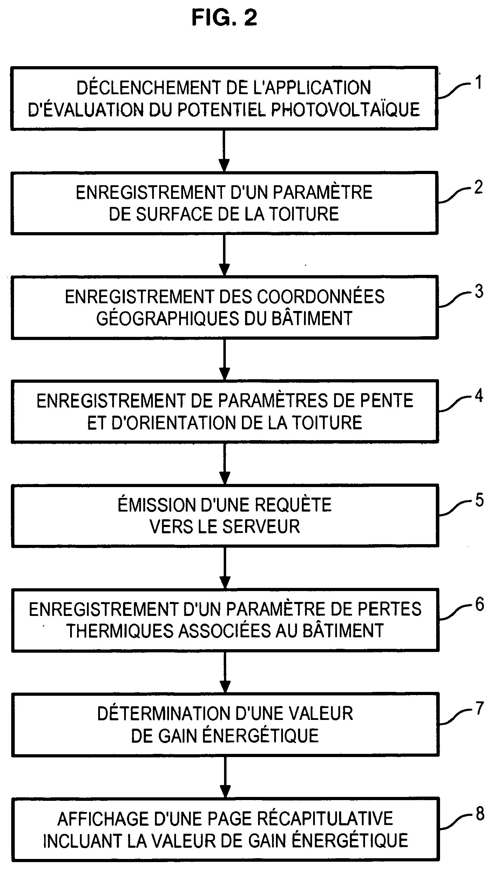

La figure 2 est un diagramme illustrant de manière schématique des étapes d'un procédé d'estimation de la valeur de gain énergétique à partir du terminal utilisateur 20, conforme à un mode de réalisation de l'invention.

Selon une première étape 1, l'utilisateur déclenche l'application d'évaluation d'un potentiel photovoltaïque, par exemple en sélectionnant sur l'écran du terminal une icône associée à l'application, ce qui a pour effet que l'application exécute automatiquement les étapes suivantes.

Selon une deuxième étape 2, l'application commande l'affichage sur l'écran 22 du terminal d'une page demandant à l'utilisateur d'entrer une valeur de surface de la toiture. A cet effet, l'utilisateur peut avoir le choix entre plusieurs possibilités.

Selon une première possibilité, l'utilisateur saisit manuellement à l'aide du clavier du terminal la valeur numérique de la surface de la toiture 30.

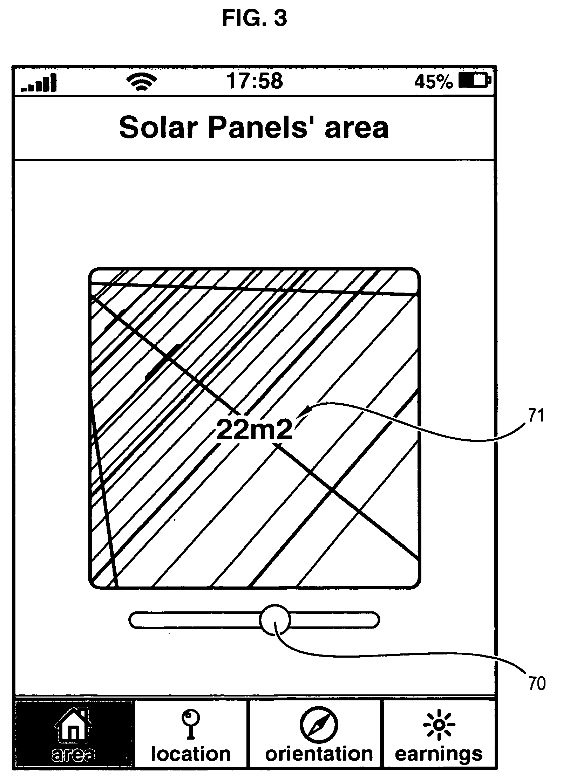

Selon une deuxième possibilité, illustrée sur la figure 3, la page affichée inclut un curseur 70 qui peut être déplacé par l'utilisateur afin de définir la valeur de surface S de la toiture. La page affichée inclut également une valeur de surface 71, en mètres carrés, qui évolue à mesure que l'utilisateur déplace le curseur 70. L'utilisateur peut ainsi positionner le curseur 70 de manière à régler la valeur de surface affichée pour qu'elle corresponde à la surface S de la toiture 30.

Selon une troisième possibilité, la page affichée inclut une carte représentant la zone géographique dans laquelle se trouve le terminal utilisateur 20 et sur laquelle apparaît le bâtiment 40. L'utilisateur peut pointer les quatre coins du versant de la toiture sur l'écran, ce qui permettra à l'application de déterminer ultérieurement la surface de la toiture en fonction de la pente de la toiture et de l'échelle de la carte.

La valeur de la surface S de la toiture 30 ainsi déterminée est enregistrée dans la mémoire 21 du terminal utilisateur 20.

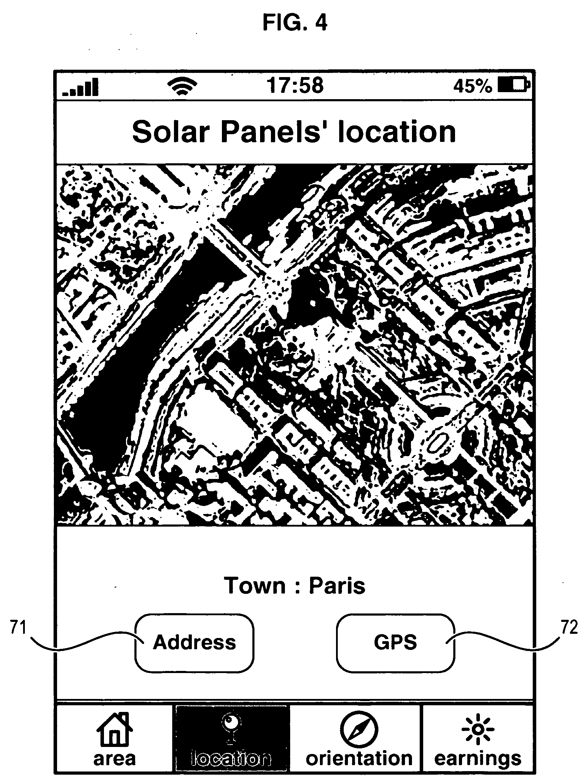

Selon une troisième étape 3, l'application commande l'affichage d'une page demandant à l'utilisateur d'entrer les coordonnées géographiques du bâtiment 40. La page, illustrée sur la figure 4, contient deux boutons : un bouton « adresse » 71 et un bouton « GPS » 72. Les boutons 71 et 72 sont activables par l'utilisateur et lui permettent de sélectionner soit une localisation du bâtiment par saisie d'une adresse, soit une localisation du bâtiment au moyen du récepteur GPS contenu dans le terminal utilisateur.

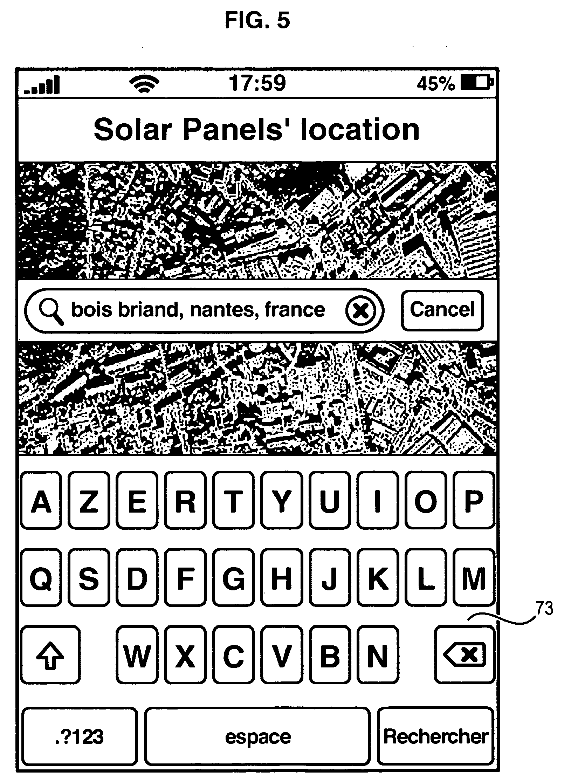

Selon une première possibilité, l'utilisateur active le bouton « adresse » 71. Dans ce cas, l'application commande l'affichage d'une page, illustrée sur la figure 5, représentant un clavier 73. L'utilisateur saisit l'adresse du bâtiment en actionnant les différentes touches du clavier. Une fois l'adresse saisie, le terminal utilisateur 20 convertit l'adresse en des coordonnées géographiques du bâtiment 40, incluant une latitude $\varphi$ et une longitude $\psi$.

Selon une deuxième possibilité, l'utilisateur active le bouton « GPS » 72. Dans ce cas, l'application déclenche le récepteur GPS 23 du terminal utilisateur afin que le récepteur GPS localise te terminal. Les coordonnées géographiques du terminal déterminées par le récepteur GPS sont assimilées aux coordonnées géographiques du bâtiment 40, incluant la latitude et la longitude.

Les coordonnées géographiques du bâtiment ainsi déterminées sont enregistrées dans la mémoire 21 du terminal utilisateur 20.

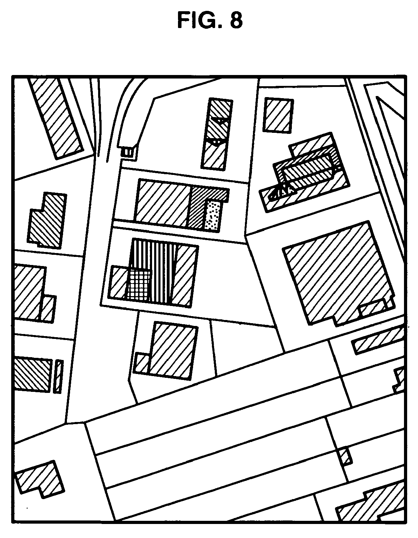

Selon une quatrième étape 4, l'application commande l'affichage sur l'écran du terminal d'une page, illustrée sur la figure 8, demandant à l'utilisateur d'entrer une valeur de pente $\alpha$ et une valeur d'orientation $\beta$ de la toiture 30.

Selon une première possibilité, la valeur de pente $\alpha$ est déterminée par l'accéléromètre et la valeur d'orientation est déterminée par la boussole.

A cet effet, l'utilisateur se place en face de la façade du bâtiment vers laquelle le versant de la toiture descend, et pointe le terminal mobile vers le faîte de la toiture (comme cela est illustré sur la figure 1). Le téléphone mobile enregistre les valeurs de pente et d'orientation du terminal mobile dans cette position.

Selon une deuxième possibilité, l'utilisateur saisit manuellement les valeurs de pente et d'orientation de la toiture.

Comme cela est illustré sur la figure 8, la page affichée contient quatre boutons 74 à 77, représentant respectivement une flèche dirigée vers le haut, une flèche dirigée vers le bas, une flèche dirigée vers la droite et une flèche dirigée vers la gauche.

Les boutons 74 et 75 représentant des flèches dirigées respectivement vers le haut et vers le bas sont activables par l'utilisateur pour définir la pente a de la toiture 30. La page affichée inclut également une valeur de pente 78, en pourcents, qui évolue en fonction de l'actionnement des boutons par l'utilisateur. L'utilisateur peut ainsi actionner les boutons 74 et 75 de manière à régler la valeur de pente affichée pour qu'elle corresponde à la pente de la toiture 30.

Les boutons 76 et 77 représentant des flèches dirigées respectivement vers la droite et vers la gauche sont activables par l'utilisateur pour définir l'orientation de la toiture. La page affichée inclut également une valeur d'orientation 79, c'est-à-dire un azimut, qui évolue en fonction de l'actionnement des boutons par l'utilisateur. L'utilisateur peut ainsi actionner les boutons 76 et 77 de manière à régler l'orientation affichée pour qu'elle corresponde à l'orientation de la toiture 30.

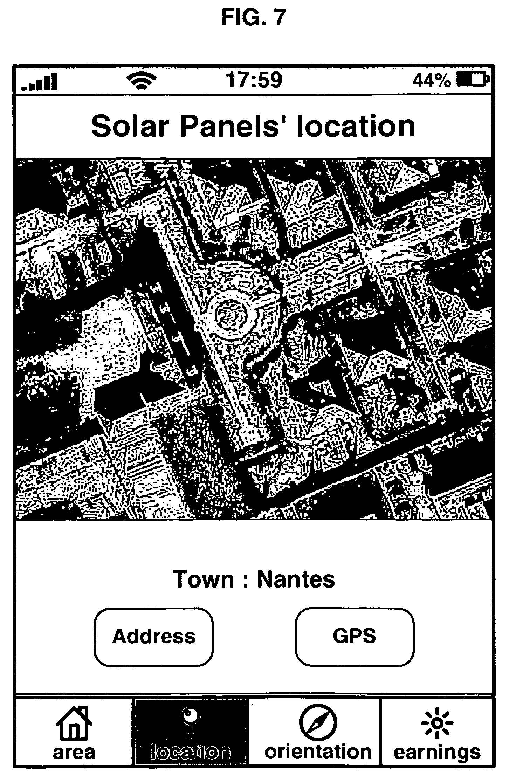

Selon une cinquième étape 5, illustrée sur la figure 7, l'application commande le. terminal utilisateur 20 pour que le terminal transmette une requête de transfert de données thermographiques au serveur 50, la requête pouvant notamment contenir les coordonnées géographiques du bâtiment. Le serveur 50 transmet en réponse au terminal utilisateur 20 des données thermographiques relatives à une zone géographique dans laquelle est situé le bâtiment. Ces données thermographiques se présentent sous la forme d'une carte thermographique.

Selon une sixième étape 6, illustrée sur la figure 8, l'application localise le bâtiment sur la carte thermographique grâce aux coordonnées géographiques du bâtiment. L'application détermine une valeur de pertes thermiques du bâtiment à partir de la couleur de la toiture 30 apparaissant sur la carte.

Les valeurs de pertes thermiques peuvent par exemple être les suivantes (exprimées en kilowatt heure par mètre carré par an) dans le tableau 1 :

**Tableau 1 : Valeurs de pertes thermiques apparaissant du la carte thermique**

| Couleur | Perte énergétique | Valeur (kWatth/m$^2$/an) |
|---|---|---|
| Bleu foncé | Nulle ou non perceptible | $\leq 20$ |

(suite)

| Couleur | Perte énergétique | Valeur (kWatth/m²/an) |
|---------|-------------------|----------------------|
| Cyan | Très faible | 20 à 80 |
| Vert | Faible | 80 à 200 |
| Jaune | Forte | 200 à 300 |
| Rouge | Très forte | 300 à 400 |
| Rose | Excessive | ≥ 400 |

Selon une septième étape 7, l'application détermine une valeur de gain énergétique qui serait obtenu par une installation de panneaux photovoltaïques sur la toiture 30 du bâtiment 40. La valeur de gain énergétique est déterminée à partir des paramètres collectés par le terminal utilisateur, à savoir les coordonnées géographiques du bâtiment, l'orientation de la toiture, la pente de la toiture et de la valeur de pertes thermiques associée à la toiture.

Plus précisément, la valeur de gain énergétique $E$ est déterminée de la manière suivante :

$$E = E_1 + E_2$$

où $E_1$ est l'énergie qui serait produite par des panneaux photovoltaïque installés en toiture par an et $E_2$ est l'énergie économisée du fait d'une rénovation de la toiture par an.

Selon une première possibilité, la valeur du paramètre $E_1$ est obtenue en interrogeant une base de données publique à partir des coordonnées géographiques du bâtiment, de l'orientation de la toiture et de la pente de la toiture. Un exemple de base de données se trouve à l'adresse http://re.jrc.ec.europa.eu/pvgis/app4/pvest.php#.

Selon une deuxième possibilité, la valeur du paramètre $E_1$ est estimée de la manière suivante :

$$E_1 = e \times c \times \frac{\alpha}{15} \times \frac{\beta - 90}{15} \times S \times pr \times pertes$$

où $e$ est l'ensoleillement en kilowatt heure par mètre carré par an, $c$ est un facteur de correction qui dépend de la pente et de l'orientation de la toiture, $\alpha$ est la pente de la toiture en degrés, $\beta$ est l'azimut de la toiture en degrés, $S$ est la surface de la toiture en mètres carrés, $pr$ est le rendement indicatif des panneaux, et $pertes$ est un facteur de pertes.

L'ensoleillement $e$ est estimé de la manière suivante :

$$e = -\frac{\varphi - 51}{10} \times 1000 + 1000$$

où $\varphi$ est la latitude du bâtiment en degrés.

Le facteur de correction $c$ est déterminé à partir du tableau 2 suivant :

| | | PENTE $\alpha$ | | | | | | |
|---|---|---|---|---|---|---|---|---|
| | | 0° | 15° | 30° | 45° | 60° | 75° | 90° |
| AZIMUT $\beta$ | 90° | 1,05 | 1,00 | 1,00 | 0,94 | 0,89 | 0,83 | 0,83 |
| | 105° | 1,05 | 1,05 | 1,00 | 1,00 | 0,94 | 0,89 | 0,83 |
| | 120° | 1,05 | 1,05 | 1,05 | 1,05 | 1,00 | 0,94 | 0,89 |
| | 135° | 1,05 | 1,05 | 1,11 | 1,05 | 1,00 | 0,94 | 0,94 |
| | 150° | 1,05 | 1,11 | 1,11 | 1,11 | 1,05 | 1,00 | 0,94 |
| | 165° | 1,05 | 1,11 | 1,11 | 1,11 | 1,11 | 1,00 | 0,94 |
| | 180° | 1,05 | 1,11 | 1,11 | 1,11 | 1,11 | 1,00 | 0,94 |
| | 195° | 1,05 | 1,11 | 1,11 | 1,11 | 1,11 | 1,00 | 0,94 |
| | 210° | 1,05 | 1,11 | 1,11 | 1,11 | 1,05 | 1,00 | 0,94 |

| | | | | | | | | |
|---|---|---|---|---|---|---|---|---|
| | 225° | 1,05 | 1,05 | 1,11 | 1,05 | 1,00 | 0,94 | 0,94 |
| | 240° | 1,05 | 1,05 | 1,05 | 1,05 | 1,00 | 0,94 | 0,89 |
| | 255° | 1,05 | 1,05 | 1,00 | 1,00 | 0,94 | 0,89 | 0,83 |
| | 270° | 1,05 | 1,00 | 1,00 | 0,94 | 0,89 | 0,83 | 0,83 |

**Tableau 2 : Facteur de correction en fonction de la pente et de l'azimut de la toiture**

Le rendement indicatif des panneaux *pr* est égal à 0,7.

Le facteur de pertes *pertes* est égal à 0,14.

La valeur du paramètre $E_2$ est estimée comme étant l'énergie économisée en considérant qu'une rénovation de la toiture aurait pour conséquence la toiture rénovée présenterait une perte énergétique faible (soit de l'ordre de 80 à 200 kilowatt heure par mètre carré par an).

L'estimation du gain énergétique ainsi réalisée tient compte non seulement de l'énergie électrique produite par les panneaux photovoltaïques ($E_1$), mais également de l'énergie économisée du fait de l'installation des panneaux sur la toiture qui aurait pour effet de modifier les pertes thermiques engendrées par le bâtiment ($E_2$).

Autrement dit, le gain énergétique procuré par l'installation des panneaux photovoltaïques est plus important si la toiture initiale est vétuste et que l'isolation de la toiture est rénovée au moment de l'installation des panneaux.

L'application détermine également une quantité de gaz à effet de serre dont l'émission dans l'atmosphère est évitée du fait de l'installation des panneaux photovoltaïques. La quantité Q est déterminée de la manière suivante :

$$Q = E \times i$$

où $E$ est la valeur de gain énergétique et $i$ est un indicateur de contenu en $CO_2$ de l'électricité consommée en France fourni par l'ADEME (Agence De l'Environnement et de la Maîtrise de l'Energie) et EDF (Electricité de France).

L'indice i présente une valeur prédéfinie choisie entre 60 et 120 grammes par kilowatt heure.

L'application détermine enfin les économies financières P réalisées du fait de l'installation des panneaux photovoltaïques. Le montant de ces économies est déterminé de la manière suivante :

$$P = E_1 \times t_1 + E_2 \times t_2$$

où $E_1$ est l'énergie qui serait produite par les panneaux photovoltaïques, $t_1$ est un tarif auquel l'énergie électrique produite par les panneaux est achetée par un fournisseur d'énergie électrique (tel que par exemple la société EDF), $E_2$ est l'énergie économisée du fait d'une rénovation de la toiture et $t_2$ est un tarif auquel l'énergie électrique est facturée par le fournisseur d'énergie électrique.

Par exemple, le tarif $t_1$ de rachat peut avoir une valeur choisie entre 29 et 46 centimes par kilowatt heure, et le tarif $t_2$ de facturation peut avoir une valeur comprise entre 32 et 35 centimes par kilowatt heure.

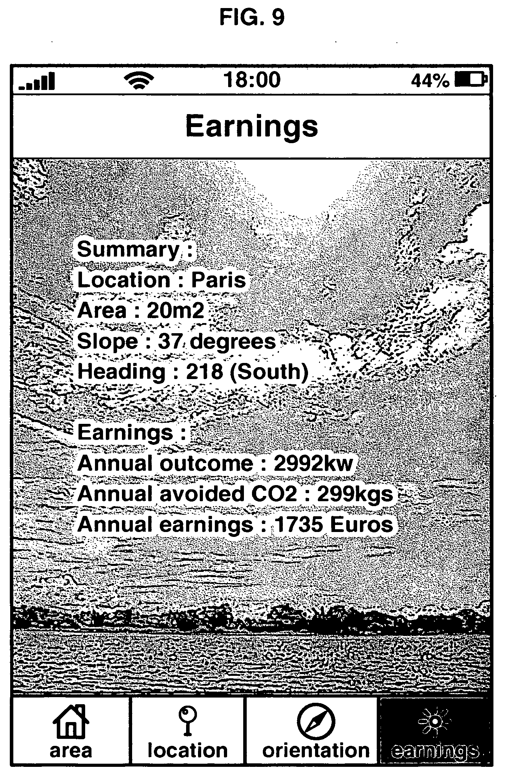

Selon une huitième étape 8, l'application commande l'affichage sur l'écran 22 du terminal utilisateur 20 d'une page récapitulative, illustrée sur fa figure 9, sur laquelle apparaissent :

- d'une part, les données d'entrée, telles que les coordonnées géographiques du bâtiment, l'orientation de la toiture et la pente de la toiture,
- d'autre part, les résultats de l'estimation, incluant la valeur du gain énergétique attendu, la quantité de gaz à effet de serre émis évités, et les économies financières réalisées du fait de l'installation des panneaux photovoltaïques.

Le procédé proposé permet à un utilisateur d'évaluer sur place et en temps réel l'intérêt d'installer des équipements photovoltaïque sur la toiture d'un bâtiment.

L'utilisateur a la possibilité de modifier à volonté les paramètres utilisés pour l'évaluation, ce qui lui permet d'apprécier l'impact de chaque paramètre sur le gain énergétique réalisé.

## Revendications

1. Procédé d'évaluation d'un potentiel photovoltaïque d'un bâtiment (40) à partir d'un terminal utilisateur (20), dans lequel le terminal utilisateur (20) contient une application adaptée pour exécuter automatiquement des étapes de :

   - (6) déterminer une valeur de pertes thermiques associées au bâtiment (40), en fonction de coordonnées géographiques du bâtiment, et
   - (7) estimer une valeur de gain énergétique associé à une installation de panneaux photovoltaïques sur une toiture (30) du bâtiment (40), à partir des coordonnées géographiques du bâtiment, d'un paramètre d'orientation de la toiture, d'un paramètre de pente de la toiture et de la valeur de pertes thermiques associée à la toiture, dans lequel la valeur de pertes thermiques est déterminée à partir de données thermographiques, les données thermographiques incluant, pour chaque bâtiment se trouvant dans une zone géographique donnée, une valeur de pertes énergétiques, et
   dans lequel l'application est adaptée pour exécuter des étapes de :
   - (5) émettre une requête vers un serveur (50) distant, le serveur contenant les données thermographiques,
   - (6) recevoir de la part du serveur (50) les données thermographiques incluant des données représentatives des pertes thermiques du bâtiment (40) dont le potentiel photovoltaïque est évalué.

2. Procédé selon la revendication 1, dans lequel l'application est adaptée pour exécuter une étape de :

   - (7) déterminer une quantité de gaz à effet de serre dont l'émission dans l'atmosphère est évitée du fait de l'installation des panneaux photovoltaïques, en fonction de la valeur de gain énergétique estimée.

3. Procédé selon l'une des revendications 1 ou 2, dans lequel l'application est adaptée pour exécuter une étape de :

   - (7) déterminer des économies financières réalisées du fait de l'installation des panneaux photovoltaïques, en fonction de la valeur de gain énergétique estimée.

4. Procédé selon l'une des revendications 1 à 3, dans lequel la requête émise par le terminal (20) contient des coordonnées géographiques du bâtiment (40).

5. Procédé selon l'une des revendications 1 à 4, dans lequel les données thermographiques sont sous la forme de cartes thermographiques.

**6.** Procédé selon l'une des revendications 1 à 5, dans lequel le terminal utilisateur (20) inclut une boussole (24) et un accéléromètre (25), le paramètre d'orientation étant déterminé par la boussole et le paramètre de pente étant déterminé par l'accéléromètre.

**7.** Procédé selon la revendication 6, dans lequel le paramètre d'orientation et de paramètre de pente sont déterminés par une étape (4) selon laquelle l'utilisateur se place en face de la façade du bâtiment (40) vers laquelle le versant de la toiture descend, et pointe le terminal (20) vers le faîte de la toiture, et le terminal (20) enregistre des valeurs de pente et d'orientation du terminal (20) dans cette position.

**8.** Application d'un potentiel photovoltaïque d'un bâtiment (40), l'application étant téléchargeable dans un terminal utilisateur (20), et étant apte à exécuter automatiquement les étapes du procédé défini par l'une des revendications 1 à 7.

**Patentansprüche**

**1.** Verfahren zur Bewertung eines photovoltaischen Potenzials eines Gebäudes (40) mit Hilfe eines Benutzerterminals (20), wobei das Benutzerterminal (20) eine Applikation enthält, die für die automatische Durchführung der folgenden Schritte geeignet ist:

- (6) Bestimmen eines Werts thermischer Verluste, die dem Gebäude (40) zugeordnet sind, in Abhängigkeit von geografischen Daten des Gebäudes, und
- (7) Berechnen eines Werts energetischen Gewinns, der einer Installation von photovoltaischen Panelen auf einem Dach (30) des Gebäudes (40) zugeordnet ist, mit Hilfe der geografischen Daten des Gebäudes, eines Ausrichtungsparameters des Dachs, eines Neigungsparameters des Dachs und des Werts thermischer Verluste, der dem Dach zugeordnet ist,
wobei der Wert thermischer Verluste mit Hilfe thermografischer Daten bestimmt wird, wobei die thermografischen Daten für jedes Gebäude, das sich in einem bestimmten geografischen Gebiet befindet, einen Wert energetischer Verluste einschließen, und
wobei die Applikation ausgebildet ist, um folgende Schritte durchzuführen:
- (5) Senden einer Anfrage an einen entfernten Server (50), wobei der Server die thermografischen Daten enthält,
- (6) Erhalten vom Server (50) der thermografischen Daten einschließlich der repräsentativen Daten der thermischen Verluste des Gebäudes (40), dessen fotovoltaisches Potenzial bewertet wird.

**2.** Verfahren nach Anspruch 1, wobei die Applikation ausgebildet ist, um den Schritt durchzuführen:

- (7) Bestimmen einer Menge von Treibhausgasen, dessen Emission in die Atmosphäre aufgrund der Installation der photovoltaischen Panele in Abhängigkeit vom berechneten Wert energetischen Gewinns verhindert wird.

**3.** Verfahren nach einem der Ansprüche 1 oder 2, wobei die Applikation ausgebildet ist, um den Schritt durchzuführen:

- (7) Bestimmen der aufgrund der Installation der photovoltaischen Panele realisierten finanziellen Einsparungen in Abhängigkeit vom berechneten Wert energetischen Gewinns.

**4.** Verfahren nach einem der Ansprüche 1 bis 3, wobei die vom Terminal (20) gesendete Anfrage geografische Daten des Gebäudes (40) enthält.

**5.** Verfahren nach einem der Ansprüche 1 bis 4, wobei die thermografischen Daten in Form thermografischer Karten vorliegen.

**6.** Verfahren nach einem der Ansprüche 1 bis 5, wobei das Benutzerterminal (20) einen Kompass (24) und einen Beschleunigungsmesser (25) einschließt, wobei der Ausrichtungsparameter vom Kompass bestimmt wird und der Neigungsparameter vom Beschleunigungsmesser bestimmt wird.

**7.** Verfahren nach Anspruch 6, wobei der Ausrichtungsparameter und der Neigungsparameter durch einen Schritt (4) bestimmt werden, gemäß dem sich der Benutzer gegenüber der Fassade des Gebäudes (40) aufstellt, zu der sich die Schräge des Dachs neigt, und mit dem Terminal (20) den Dachfirst anpeilt, und das Terminal (20) Neigungs- und Ausrichtungswerte des Terminals (20) in dieser Position speichert.

8. Applikation eines fotovoltaischen Potenzials eines Gebäudes (40), wobei die Applikation in ein Benutzerterminal (20) herunterladbar ist und imstande ist, automatisch die Schritte des von einem der Ansprüche 1 bis 7 definierten Verfahrens durchzuführen.

**Claims**

1. A method for evaluating a photovoltaic potential of a building (40) from a user terminal (20), wherein the user terminal (20) contains an application suitable for automatically performing steps of:

   - (6) determining a value of thermal losses associated with the building (40), according to geographical coordinates of the building, and
   - (7) estimating an energy gain value associated with an installation of photovoltaic panels on a roofing (30) of the building (40), from geographical coordinates of the building, from an orientation parameter of the roofing, from a slope parameter of the roofing and from the value of thermal losses associated with the roofing,
   wherein the value of thermal losses is determined from thermographic data, the thermographic data including, for each building located in a given geographical area, a value of energy losses, and
   wherein the application is suitable for executing steps of:
   - (5) transmitting a request to a remote server (50), the server containing the thermographic data,
   - (6) receiving from the server (50) thermographic data including data representative of the thermal losses of the building (40), the photovoltaic potential of which is evaluated.

2. The method according to claim 1, wherein the application is suitable for executing a step of:

   - (7) determining a greenhouse gas amount, the emission of which is avoided because of the installation of photovoltaic panels, according to the estimated energy gain value.

3. The method according to one of claims 1 or 2, wherein the application is suitable for executing a step of:

   - (7) determining financial savings made because of the installation of photovoltaic panels, according to the estimated energy gain value.

4. The method according to one of claims 1 to 3, wherein the request transmitted by the terminal (20) contains geographical coordinates of the building (40).

5. The method according to one of claims 1 to 4, wherein the thermographic data are in the form of thermographic maps.

6. The method according to one of claims 1 to 5, wherein the user terminal (20) includes a compass (24) and an accelerometer (25), the orientation parameter being determined by the compass and the slope parameter being determined by the accelerometer.

7. The method according to claim 6, wherein the orientation parameter and slope parameter are determined by a step (4), according to which the user places himself/herself facing the frontage of the building (40) towards which the side of the roofing moves downwards, and points the terminal (20) towards the ridge of the roofing, and the terminal (20) records slope and orientation values of the terminal (20) in this position.

8. An application of a photovoltaic potential of a building (40), the application being downloadable into a user terminal (20), and being able to automatically execute the steps of the method defined by one of claims 1 to 7.

# FIG. 1

S

α

40

10

20

50

60

| 20 | ECRAN TACTILE |
|----|---------------|
| 22 | |
| 21 | MEMOIRE |
| 23 | GPS |
| 24 | GOUSSOLE |
| 25 | ACCELERO |

## FIG. 2

DÉCLENCHEMENT DE L'APPLICATION
D'ÉVALUATION DU POTENTIEL PHOTOVOLTAÏQUE — 1

ENREGISTREMENT D'UN PARAMÈTRE
DE SURFACE DE LA TOITURE — 2

ENREGISTREMENT DES COORDONNÉES
GÉOGRAPHIQUES DU BÂTIMENT — 3

ENREGISTREMENT DE PARAMÈTRES DE PENTE
ET D'ORIENTATION DE LA TOITURE — 4

ÉMISSION D'UNE REQUÊTE
VERS LE SERVEUR — 5

ENREGISTREMENT D'UN PARAMÈTRE DE PERTES
THERMIQUES ASSOCIÉES AU BÂTIMENT — 6

DÉTERMINATION D'UNE VALEUR
DE GAIN ÉNERGÉTIQUE — 7

AFFICHAGE D'UNE PAGE RÉCAPITULATIVE
INCLUANT LA VALEUR DE GAIN ÉNERGÉTIQUE — 8

## FIG. 3

## FIG. 4

# FIG. 5

## FIG. 6

## FIG. 7

FIG. 8

## FIG. 9

**Earnings**

Summary :
Location : Paris
Area : 20m2
Slope : 37 degrees
Heading : 218 (South)

Earnings :
Annual outcome : 2992kw
Annual avoided CO2 : 299kgs
Annual earnings : 1735 Euros

area | location | orientation | earnings